# EUROPÄISCHE PATENTSCHRIFT

(11) **EP 1 381 504 B1**
(45) Veröffentlichungstag und Bekanntmachung des Hinweises auf die Patenterteilung: **15.08.2007**
(21) Anmeldenummer: 01986278.8
(22) Anmeldetag: 04.10.2001
(51) Int. Cl.: B29C 67/00, B22C 7/00, B22C 23/00, B29C 41/42, B22D 29/00

(54) **VERFAHREN ZUM ENTPACKEN VON IN UNGEBUNDENEM PARTIKELMATERIAL EINGEBETTETEN FORMKÖRPERN**
METHOD FOR UNPACKING SHAPED BODIES EMBEDDED INSIDE UNBOUND PARTICLE MATERIAL
PROCEDE POUR DEBALLER DES CORPS MOULES INSERES DANS UN MATERIAU PARTICULAIRE NON LIE

(30) Priorität: 04.10.2000 DE 10049043
(43) Veröffentlichungstag der Anmeldung: 21.01.2004
(73) Patentinhaber: Voxeljet Technology GmbH, 86167 Augsburg (DE)
(72) Erfinder: EDERER, Ingo, 86926 Pflaumdorf (DE); GRAF, Bernhard, 86911 Diessen am Ammersee (DE)
(74) Vertreter: Wagner, Sigrid
(86) Internationale Anmeldenummer: PCT/DE2001/003834
(87) Internationale Veröffentlichungsnummer: WO 2002/028568

(56) Entgegenhaltungen:
- EP-A- 0 968 776
- DE-A- 19 539 117
- DE-A- 19 937 260
- US-A- 5 814 161
- US-A- 5 902 441

## Beschreibung

Die vorliegende Erfindung bezieht sich auf ein Verfahren zum Entpacken von einem in ungebundenem Partikelmaterial eingebetteten Formkörper, der auf einer zumindest in vertikaler Richtung verfahrbaren Plattform angeordnet ist, wobei um die verfahrbare Plattform zumindest während des Entpackens ein Behälter angeordnet ist, der zumindest in Richtung von der Plattform zum Formkörper hin gesehen nach oben offen ist.

Ein solches Verfahren, wobei zudem ein Verfahren der Plattform mit einer erwünschten einstellbaren Geschwindigkeit in Richtung des Formkörpers nach oben erfolgt und gleichzeitig das ungebundene Partikelmaterial abgetragen wird, ist aus der zum Stand der Technik gemäß Art. 54(3) gehörenden EP-A-1 192 040 bekannt.

Aus der Praxis sind mehrere Verfahren für die schnelle Herstellung von dreidimensionalen, auch geometrisch komplizierten, mit Hinterschneidungen versehenen Objekten bekannt, die ohne Urformwerkzeuge, d.h. ohne die bereits körperlich vorhandene äußere und innere Form der Objekte, als Positiv- oder Negativmodell sowie auch ohne Zerspanungs- und oder Abtragverfahren durchgeführt werden können und die gewünschten Objekte direkt aus der computerinternen, dreidimensionalen Darstellung der Geometrie generieren. Als Ausgangsstoffe können hierbei feste, pulverförmige oder flüssige Grundmaterialien dienen.

Diese Verfahren sind als generative Fertigungsverfahren, Rapid Prototyping, Solid Free-Form Manufacturing oder Fast Free-Form Fabrication bekannt und werden auch immer häufiger eingesetzt. Die bekanntesten dieser Verfahren sind die Stereolithographie, das Laser-Sinterverfahren und das Verfahren zum Aufbau von Gussmodellen aus Formsand, Gießereiharz und Härtern.

Insbesondere beim Rapid Prototyping von Gussmodellen erfolgt der Aufbau dieser üblicherweise mittels eines Partikelmaterials, nämlich Formsand.

Bei diesen Rapid-Prototyping-Verfahren wird über eine Plattform, auf die das Werkstück bzw. der Formkörper aufgebaut werden soll, ungebundenes Partikelmaterial, wie Formsand, verteilt und dieser dann beispielsweise durch selektives Laser-Sintern nur an den entsprechenden Stellen miteinander versintert.

Auch beim Aufbau von Gussmodellen aus Formsand, Gießereiharz und Härtern wird zuerst der Formsand auf die Plattform aufgebracht und darauf wird Gießereiharz aufgetragen. Danach erfolgt die Zuführung des Härtermaterials nur an den entsprechenden zu härtenden Stellen, also dort, wo tatsächlich der Formsand verfestigen soll.

Nach Abschluss des Aufbauprozesses befindet sich der Formkörper in einem lockeren Sandbett, da der Sand nicht selektiv aufgetragen wurde, sondern über die gesamte Plattform, auf der der Aufau des Modells erfolgt. Nach Fertigstellung des Formkörpers muss dieser Formkörper dann aus seinem Partikelbeziehungsweise Sandbett entnommen und der nicht verbundene Sand vom Modell entfernt werden.

Hierzu ist es bisher unter anderem bekannt, Pulverschüttungen und Modelle direkt in der Vorrichtung, in der der Aufbau erfolgte, zu entpacken.

So wird beispielsweise in der europäischen Offenlegungsschrift EP 0 968 776 beschrieben, dass das fertige Gussteil nach Abschluss des Bauprozesses aus dem umgebenden lockeren Sandbett entnommen wird. Der noch unverfestigte Formsand im Inneren der Form wird durch die Eingussöffnung und/oder durch die speziell zum Entfernen des nicht verfestigten Sandes vorgesehenen Öffnungen in der Form abgesaugt, herausgeschüttet oder herausgeblasen.

Aus der US 5,902,441 ist es darüber hinaus bekannt, dass der fertig hergestellte Formkörper vorzugsweise aus dem nicht verfestigten Sandbett heraus geschöpft und der an dem Formkörper anhaftende Sand entweder mit Hilfe von Pressluft oder eines Vakuums entfernt wird.

Weiterhin ist es in der Praxis üblich, den Formkörper und das überschüssige Partikelmaterial auf einen Tisch auszuleeren und dann den Formkörper zu entnehmen.

Diese Verfahren zum Entpacken von Modellen zeigen jedoch alle den Nachteil, dass die Modelle häufig beim Entnehmen beschädigt werden und dadurch Nacharbeit entsteht oder sogar ein Mehrfachbau notwendig ist, was zu höheren Herstellungskosten führt.

In der US 5,814,161 wird ein Verfahren offenbart, mit dem ungebundenes Pulver von Oberflächen, insbesondere inneren Oberflächen von Keramikformkörpern, entfernt wird. Dieses Verfahren arbeitet mit- Hilfe eines Wasserbades, in dem CO₂ gelöst wurde. Das entsprechende Modell mit den von ungebundenem Pulver verschlossenen internen Strukturen wird in dieses Wasserbad eingelegt und anschließend erfolgt eine schnelle Druckreduzierung. Derart wird das in die Pulverschüttung eindringende Wasser mit dem gelösten CO₂ zum Ausgasen gebracht und so das ungebundene Pulver aus den inneren Strukturen ausgeblasen.

Hierbei handelt es sich jedoch um ein relativ aufwendiges Verfahren, das darüber hinaus auch sehr kostenintensiv ist.

Weiterhin ist es aus der Praxis bekannt, dass der in ungebundenem Partikelmaterial eingebettete Formkörper derart entpackt wird, dass auf eine Bauplattform, auf die der Formkörper aufgebaut wurde, ein Kunststoffzylinder gestülpt wird. Danach wird die Bauplattform in ihre obere Position in Richtung zum Kunststoffzylinder verfahren und das gesamte Pulver mit dem Modell dadurch in den Zylinder geschoben.

Anschließend wird zwischen Zylinder und Bauebene eine entsprechend große Spachtel geschoben und mit dieser Spachtel wird der Zylinder aus der Vorrichtung gehoben und auf eine Siebvorrichtung gestellt. Wird nun der Zylinder nach oben abgehoben, "purzelt" das Modell heraus, beziehungsweise es liegt in einem Pulverhaufen, der sich über dem Sieb ausbreitet und langsam durch dieses hindurch in eine Auffangrinne rieselt.

Auch dieses Verfahren hat sich als relativ aufwendig erwiesen. Darüber hinaus ist mit einem solchen Verfahren das Entpacken von großen Modellen und von Modellen, die teilweise Hinterschneidungen aufweisen, sehr schwierig, da diese bei einem solchen Entpackungsprozess kippen und dadurch beschädigt werden können.

Ein weiteres Entpackungsverfahren ist aus der Praxis bekannt. Hierbei wird die Plattform bis zu ihrem oberen Anschlag in Richtung des aufgebauten Formkörpers nach oben gefahren. Dadurch breitet sich das ungebundene, nicht verfestigte Pulver jedoch über die gesamte Plattform aus. Nach dem Hochfahren muss das Modell dann aus dem Pulver ausgegraben werden.

Auch wird ein Entpacken teilweise derart durchgeführt, dass ein den Formkörper enthaltender Wechselbehälter aus der Vorrichtung zum Aufbauen des Formkörpers entnommen und der Wechselbehälter ausgeleert wird. Dazu wird entweder die Behälterwandung geöffnet oder die Bauplattform nach unten herausgenommen. Das überschüssige Pulvermaterial fließt während des Öffnens oder Absenkens des Behälters durch den entstehenden Spalt ab.

Bei allen diesen bisher bekannten Entpackungsverfahren hat es sich jedoch als nachteilig erwiesen, dass sie alle relativ aufwendig und dadurch kostenintensiv sind und darüber hinaus insbesondere große Modelle oder Modelle, die viele Hinterschneidungen aufweisen, häufig beim Entpacken beschädigt werden können.

Es ist daher Aufgabe der Erfindung, ein Verfahren zum Entpakken von in ungebundenem Partikelmaterial eingebetteten Formkörpern bereitzustellen, mit dem es auf einfache Weise möglich ist, auch große und kompliziert geformte Formkörper nach deren Herstellung von dem umgebenden, ungebundenen Partikelmaterial zu befreien, ohne beschädigt zu werden.

Diese Aufgabe wird durch ein Verfahren gemäß Anspruch 1 gelöst.

Mit einem erfindungsgemäßen Verfahren ist es nun möglich, dass der Bediener je nach Komplexität und Größe des Bauteils das Nach-Oben-Verfahren individuell durchführen und damit das Partikelmaterial abtragen kann. Dabei können beispielsweise die Verfahrschritte individuell gewählt werden und/oder die Verfahrgeschwindigkeit.

Nur der Vollständigkeit halber soll hier erwähnt werden, dass das Abtragen nicht notwendigerweise manuell erfolgen muss. Es könnte ebenso maschinell erfolgen.

Bei einfacheren Formkörpern, die fest in das ungebundene Partikelmaterial eingebettet sind und die stabil auf der Plattform gelagert werden können, kann das Nach-Oben-Verfahren der Plattform mit einer größeren Geschwindigkeit erfolgen, während bei komplizierteren oder stark überhängenden Formkörpern das Nach-Oben-Verfahren eher langsamer erfolgen wird.

Insbesondere als vorteilhaft hat es sich erwiesen, wenn das Verfahren der Plattform schrittweise erfolgt. Bei einer derartigen Ausgestaltung ist es dann möglich, dass der Bediener nicht beim Hochfahren direkt das ungebundene Partikelmaterial abtragen muss, sondern die Plattform etwas nach oben fährt und dann bei still stehender Plattform das Partikelmaterial abgetragen werden kann, die Plattform dann um ein entsprechendes Stück nach oben verfährt und so weiter.

Das Abtragen des ungebundenen Partikelmaterials kann dabei beispielsweise durch Absaugen erfolgen. Ebenso denkbar wäre, dass das Abtragen durch Abkehren oder mit Hilfe eines Pinsels, eines Löffels oder auch mittels Druckluft durchgeführt wird.

Insbesondere wenn es sich bei dem Formkörper um einen stark über seine Aufstellfläche überhängenden Formkörper handelt, hat es sich als vorteilhaft erwiesen, daß das Abtragen des ungebundenen Partikelmaterials nur oberhalb des Formkörpers erfolgt und unter den überhängenden Teilen ein stützender Restsand belassen wird, bis ansonsten der ganze Formkörper freigelegt ist.

Befindet sich die Plattform in ihrer obersten Stellung, kann das Modell wie üblich von der Plattform abgehoben werden oder auch, falls erwünscht, auf der Plattform verbleiben und diese gesamte Plattform zum Gießen herausgehoben und damit der Formkörper an die entsprechende Stelle transportiert werden.

Dadurch, dass bei einem erfindungsgemäßen Verfahren das Formstück bis zum Schluss auf der Plattform verbleibt ist es auch möglich, dass ferner am Modell oder auf der Plattform sogenannte Armierungen angebracht werden. So können beispielsweise Halterahmen angeklebt oder ansonsten befestigt werden oder auch Dübel für Ösen gesetzt werden, um damit dem zu bildenden Formkörper noch eine größere Stabilität zu geben.

An einem derartigen Rahmen könnte sich auch noch eine Halterung für eine Wendeeinrichtung befinden, mit der der Formkörper von der Plattform abgehoben und gedreht werden kann, um beispielsweise einen Oberkasten herzustellen.

Bei einer Vorrichtung zum Entpacken von einem in ungebundenem Partikelmaterial eingebetteten Formkörper, der auf einer zumindest in vertikaler Richtung verfahrbaren Plattform angeordnet ist, wobei um die verfahrbare Plattform zumindest beim Entpacken ein Behälter angeordnet ist, der zumindest in Richtung von der Plattform zum Formkörper hin gesehen nach oben offen ist, sind zumindest um den Behälter Gitterroste angeordnet.

Dadurch, dass die Vorrichtung beispielsweise auf einem Art Podest angeordnet ist, so dass um die Vorrichtung herum Gitterroste angeordnet werden können und damit der Sand nicht auf einen Boden fällt, sondern durch den Gitterrost hindurch, kann die Arbeitsumgebung der Vorrichtung leichter sauber gehalten werden und auch die Beeinträchtigungen des Bedieners können vermindert werden.

Dies hat sich insbesondere als vorteilhaft erwiesen, wenn ein Entpacken gemäß einem vorbeschriebenen Verfahren erfolgt, da der Bediener zum Freilegen des Formkörpers um die Vorrichtung herum gehen können muss, damit er das Partikelmaterial möglichst vollständig abtragen kann.

Da das Abtragen in der Entpackvorrichtung stattfindet, ist es wichtig, dass gerade in dieser Umgebung Gitterroste vorgesehen sind.

Insbesondere dann, wenn unter den Gitterrosten Schubladen zum Aufnehmen des ungebundenen Partikelmaterials vorgesehen sind, kann eine erfindungsgemäße Vorrichtung sehr einfach gereinigt werden, indem die Schubladen entnommen und geleert werden.

Ist die Plattform auf Rollenbahnen geführt, kann sie beispielsweise einfach an eine Anlage zum Herstellen des Formkörpers angekoppelt werden und dadurch leicht integriert werden. So ist es beispielsweise möglich, dass die Plattform in eine Vorrichtung zum Aufbauen von Formkörpers über eine Rollenbahn eingefahren wird, der Formkörper aufgebaut wird, dadurch die Vorrichtung in eine erfindungsgemäße Entpackvorrichtung bzw. Entpackstation über eine Rollenbahn eingefahren wird und unter Umständen nach dem Entpacken direkt zum Gießen transportiert wird und zwar wiederum auf einer Rollenbahn.

Eine solche Anordnung ist jedoch nicht zwingend, vielmehr wäre es sogar auch denkbar, die erfindungsgemäße Vorrichtung direkt in eine Vorrichtung zum Aufbauen von Modellen zu integrieren.

Ist eine Führung auf zumindest einer Rollenbahn vorgesehen, so sollte über der Rollenbahn zumindest eine begehbare Brücke angeordnet werden können, damit der Bediener leichter die gesamte Werkstückplattform erreichen kann.

In einer bevorzugten Vorrichtung ist zumindest eine Bedieneinrichtung vorgesehen, mit der die Plattform mit einer erwünschten Geschwindigkeit verfahren werden kann. Diese Bedieneinrichtung sollte leicht zugänglich und einfach ausgestaltet sein. Es hat sich hierfür eine "UP"-, eine "DOWN"-, eine "FULL DOWN"-, eine "FULL-UP" und eine "STOPP"-Taste bewährt.

Besonders vorteilhaft ist es, wenn an mindestens zwei Seiten der Vorrichtung eine Bedieneinrichtung zum Bewegen der Plattform angeordnet ist.

Weitere Vorteile und vorteilhafte Ausgestaltungen des Gegenstandes der Erfindung ergeben sich aus dem nachfolgend anhand der Zeichnung prinzipmäßig beschriebenen Ausführungsbeispiels.

Es zeigt hierbei:
- Figur 1: eine schematische Darstellung des Ablaufs des Verfahrens gemäß einer bevorzugten Ausführungsform der Erfindung;
- Figur 2: eine Darstellung eines in einem ungebundenen Partikelmaterial eingebetteten Formkörpers in einer teilweise geschnittenen Ansicht;
- Figur 3: eine Vorrichtung zum Ausführen der Erfindung; und
- Figur 4: eine Vorrichtung gemäß Figur 3, wobei aus Übersichtlichkeitsgründen der den Formkörper enthaltende Behälter und die Plattform weggelassen wurden.

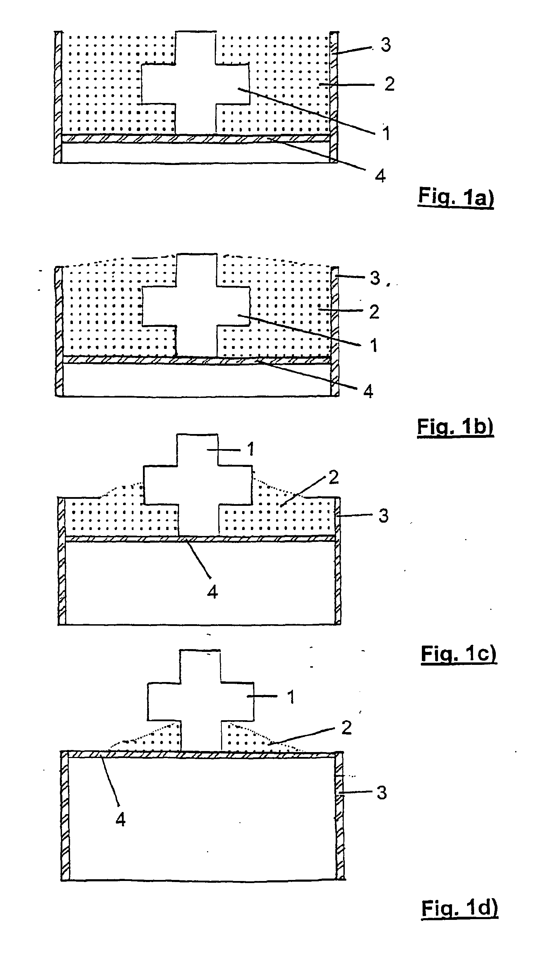

Die Figur 1 zeigt das Entpacken des Formkörpers 1 in Schritten. Dabei ist die Plattform 4, der Behälter 3 sowie der Formkörper 1 selbst in einer geschnittenen Ansicht dargestellt. Der Formkörper 1 ist von ungebundenem Partikelmaterial 2 umgeben. Derart in ungebundenes Partikelmaterial 2 eingebettet wird der Formkörper 1 erhalten, wenn er in einem üblicherweise verwendeten Rapid-Prototyping-Verfahren hergestellt wurde. Als Beispiel sei hier die Gussmodellherstellung aus Formsand, Gießereiharz und Härtern erwähnt.

Dieser Formkörper 1 mit dem umgebenden ungebundenen Partikelmaterial 2 ist gemäß der gezeigten bevorzugten Ausführungsform in einem sogenannten Wechselbehälter angeordnet, der durch die Plattform 4 und den Behälter 3 gebildet werden. In einem solchen Wechselbehälter findet auch der Aufbau des Formkörpers 1 statt, wobei die in dem Behälter 3 enthaltende Plattform 4 zumindest in vertikaler Richtung verfahrbar ist, was auch beim Aufbau des Modells zur Anwendung kommen kann.

Zum Entpacken des Formkörpers 1 wird nun erfindungsgemäß mit einer erwünschten einstellbaren Geschwindigkeit die verfahrbare Plattform 4 in Richtung des Formkörpers 1 nach oben verfahren und gleichzeitig das ungebundene Partikelmaterial 2 abgetragen.

Die Figuren 1a) bis d) zeigen verschiedene Zustände des Nach-Oben-Verfahrens der verfahrbaren Plattform 4. Wie insbesondere der Figur 1c) und 1d) zu entnehmen ist, wird beim Nach-Oben-Verfahren oder, falls das Nach-Oben-Verfahren schrittweise erfolgt, auch beim Stillstand nach dem Nach-Oben-Verfahren das ungebundene Partikelmaterial 2 immer wieder oder permanent durch Abpinseln, Absaugen oder mit Hilfe von Druckluft abgetragen.

In der Figur 1 ist als Formkörper 1 ein Kreuz im Querschnitt aufweisendes Rohrstück dargestellt, das in einem vorangehenden Arbeitsschritt aufgebaut wurde. Damit dieses Rohrkreuz auf der Plattform 4, auch beim Nach-Oben-Verfahren dieser, einen gesicherten Stand beibehält, wird bis zum Schluss ungebundenes Partikelmaterial 2 unterhalb der seitlichen Rohrteile belassen, was insbesondere in der Figur 1d) gut zu erkennen ist.

Befindet sich nun die Plattform 4, wie in der Figur 1d) dargestellt, in ihrer obersten Position, kann das Rohrkreuz einfach von der Plattform 4 abgehoben werden.

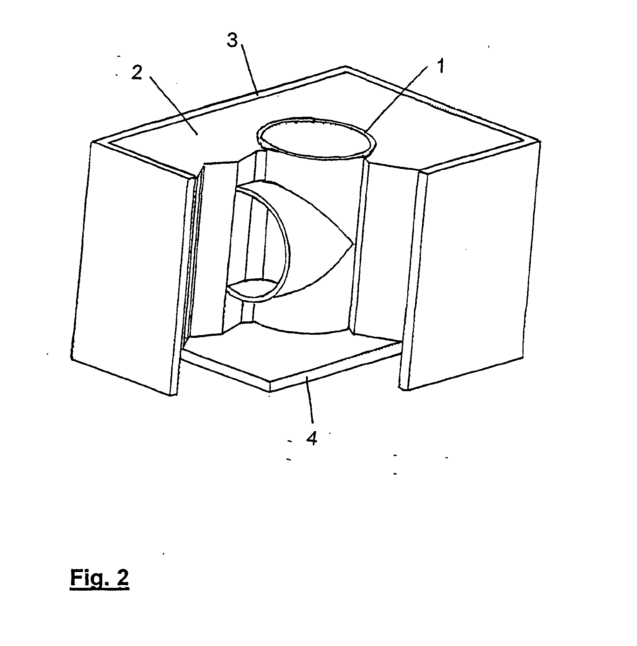

Zur besseren Veranschaulichung ist in der Figur 2 nochmals der den Formkörper 1 enthaltende Wechselbehälter in einer dreidimensionalen, teilweise geschnittenen Darstellung, gezeigt. Dieser Formkörper 1 ist von ungebundenem Partikelmaterial 2 umgeben und befindet sich in dem Behälter 3, der nach oben von der Werkstückplattform 4 in Richtung des Formstücks 1 gesehen offen ist.

Wie der Figur 2 zu entnehmen ist, wurde hierbei vorzugsweise ein im wesentlicher rechteckiger Behälter 3 und eine entsprechende Plattform 4 verwendet. Dies ist jedoch nicht zwingend notwendig, es wäre durchaus denkbar, dass sowohl der Behälter 3 als auch die Plattform 4 jede andere erdenkliche Form aufweisen.

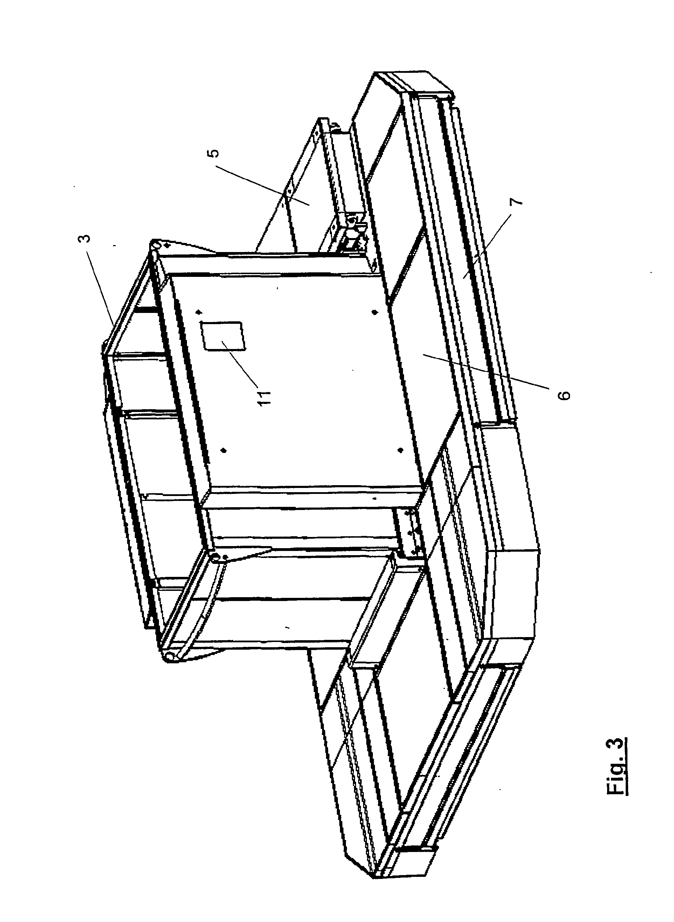

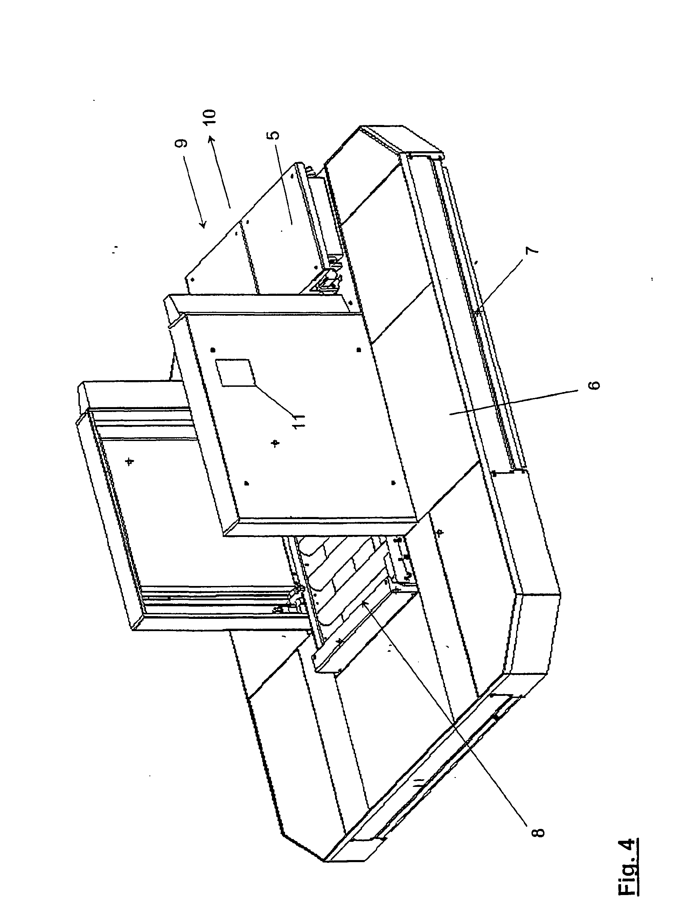

Die Figur 3 zeigt eine Vorrichtung zum Ausführen der Erfindung und die Figur 4 zeigt ebenfalls die Vorrichtung, wobei dort aus Übersichtlichkeitsgründen der Behälter 3 und die Plattform 4 nicht dargestellt sind.

Gemäß der gezeigten bevorzugten Vorrichtung wird der Behälter 3 schon beim Aufbau des Formkörpers 1 verwendet. Dies ist jedoch nicht zwingend notwendig, da es sich bei dem Behälter 3 auch um einen erst vor dem Entpacken angebrachten Behälter 3 handeln kann.

Figur 3 zeigt auch, dass um den Behälter 3 Gitterroste 6 angeordnet sind, wobei unter den Gitterrosten Schubladen 5 zum Aufnehmen des ungebundenen Partikelmaterials 2 angeordnet sind, die wiederum leicht entfernt werden können.

Wie insbesondere der Figur 4 zu entnehmen ist, ist die Plattform 4 gemäß der gezeigten bevorzugten Vorrichtung auf einer Rollenbahn 8 geführt. So ist es möglich, dass die Werkstückplattform 4 mit oder ohne Behälter 3 über eine Rollenbahn 8 in die Vorrichtung zum Entpacken gefahren wird. Dabei kann die Rollenbahn 8 entweder durch die Vorrichtung durchführen oder auch nur in eine Richtung hineinführen.

Gemäß der gezeigten Vorrichtung führt die Rollenbahn 8 nicht durch die Vorrichtung zum Entpacken hindurch. In der Figur 4 ist die Einfahrrichtung durch den Pfeil 9 und die Ausfahrrichtung durch den Pfeil 10 dargestellt. Somit wird die Plattform 4 von der selben Seite in die Vorrichtung be- und auch wieder entladen.

An der Seite der Vorrichtung an der die Rollenbahn 8 hinein geführt wird, wird, damit für den Bediener eine möglichst gute Zugänglichkeit gewährleistet ist, gemäß der gezeigten Vorrichtung über der Rollenbahn 8 eine begehbare Brücke 5 angeordnet. Diese Brücke 5 ist beispielsweise zweigeteilt und kann rechts und links von der Rollenbahn 8 weggeklappt werden, wenn die Plattform 4 aus der Vorrichtung heraus gefahren werden soll.

Mit dem Kasten 11 in Figur 3 und Figur 4 ist schematisch die Bedieneinrichtung 11 zum Hoch- und Herunterfahren der Plattform 4 dargestellt. Eine solche Bedieneinrichtung ist dabei spiegelverkehrt auf der anderen Seite der Vorrichtung ebenfalls vorgesehen, so dass der Bediener möglichst in jeder Position beim Abtragen des ungebundenen Partikelmaterials 2 leicht eine der beiden Bedieneinrichtungen 11 erreichen kann.

### Bezugszeichenliste

- 1: Formkörper
- 2: ungebundenes Partikelmaterial
- 3: Behälter
- 4: Plattform
- 5: Begehbare Brücke
- 6: Gitter
- 7: Schublade
- 8: Rollenbahn
- 9: Einfahrrichtung
- 10: Ausfahrrichtung
- 11: Bedieneinrichtung

## Patentansprüche

1. Verfahren zum Entpacken von einem in ungebundenem Partikelmaterial eingebetteten Formkörper (1), der auf einer zumindest in vertikaler Richtung verfahrbaren Plattform (4) angeordnet ist, wobei um die verfahrbare Plattform zumindest während des Entpackens ein Behälter (3) angeordnet ist, der zumindest in Richtung von der Plattform zum Formkörper hin gesehen nach oben offen ist, und wobei
ein Verfahren der Plattform (4) mit einer erwünschten einstellbaren Geschwindigkeit in Richtung des Formkörpers (1) nach oben erfolgt und gleichzeitig das ungebundene Partikelmaterial (2) nur soweit abgetragen wird, daß um den unteren Bereich des Formkörpers ein Stützender Fast um Partikelmaterial belansen wird.

2. Verfahren nach Anspruch 1,
**dadurch gekennzeichnet,**
**dass** das Verfahren der Plattform (4) schrittweise erfolgt.

3. Verfahren nach Anspruch 1 oder 2,
**dadurch gekennzeichnet,**
**dass** Verfahrschritte oder/und Verfahrgeschwindigkeit individuell wählbar sind.

4. Verfahren nach einem der vorhergehenden Ansprüche,
**dadurch gekennzeichnet,**
**dass** das Abtragen des ungebundenen Partikelmaterials (2) durch Absaugen erfolgt.

5. Verfahren nach einem der vorhergehenden Ansprüche,
**dadurch gekennzeichnet,**
**dass** das Abtragen des ungebundenen Partikelmaterials (2) durch Abkehren erfolgt.

## Claims

1. A method for decompaction of a molded body (1) which is embedded in unbound particulate material and is arranged on a platform (4) that is displaceable at least in a vertical direction, wherein a container (3) is disposed around the displaceable platform at least during unpacking, said container (3) being upwardly open at least when viewed in the direction from the platform to the molded body, and wherein an upward movement of the platform (4) is effected at a desired, adjustable speed in the direction of the molded body (1) and at the same time the unbound particulate material (2) is removed only to such an extent that a supporting residue of particulate material is maintained around the bottom part of the molded body.

2. Method according to claim 1, **characterized in that** displacement of the platform (4) is effected in a stepwise manner.

3. Method according to claim 1 or 2, **characterized in that** the steps of displacement or/and the speed of displacement can be selected individually.

4. Method according to any one of the preceding claims, **characterized in that** removal of the unbound particulate material (2) is effected by aspiration.

5. Method according to any one of the preceding claims, **characterized in that** removal of the unbound particulate material (2) is effected by sweeping.

## Revendications

1. Procédé de décompactage d'un corps moulé (1) qui est noyé dans du matériau en particules non-lié et est arrangé sur une plateforme (4) déplaçable au moins en direction verticale, procédé dans lequel un conteneur (3) est disposé autour de ladite plateforme déplaçable au moins pendant le décompactage, ledit conteneur (3) étant ouvert en haut, au moins vu dans la direction de la plateforme au corps moulé, et dans lequel un déplacement de la plateforme (4) vers le haut est effectué à une vitesse désirée et ajustable en direction du corps moulé (1), et en même temps ledit matériau (2) en particules est enlevé seulement jusqu'à laisser un reste supportant de matériau en particules autour de la partie inférieure du corps moulé.

2. Procédé selon la revendication 1, **caractérisé en ce que** le déplacement de la plateforme (4) est effectué en étapes.

3. Procédé selon la revendication 1 ou 2, **caractérisé en ce que** les étapes de déplacement ou/et la vitesse de déplacement peuvent être sélectionnes individuellement.

4. Procédé selon l'une quelconque des revendications précédentes, **caractérisé en ce que** l'enlèvement du matériau (2) en particules non-lié est effectué par aspiration.

5. Procédé selon l'une quelconque des revendications précédentes, **caractérisé en ce que** l'enlèvement du matériau (2) en particules non-lié est effectué par balayage.
